# EUROPEAN PATENT APPLICATION

(11) **EP 1 101 514 A2**
(43) Date of publication of application: **23.05.2001**
(21) Application number: 00250353.0
(22) Date of filing: 26.10.2000
(51) Int. Cl.: A63F 9/24

(54) **Football robot control system using infrared modules**

(30) Priority: 30.10.1999 KR 9947713
(71) Applicant: Korea Advanced Institute of Science and Technology, Taejon, 305-7-1 (KR)
(72) Inventor: Kim, Jong Hwan, Yusong-Gu, Taejon, 305-333 (KR); Park, Kui Hong, Bukchzeju-Gun, Cheju, 695-800 (KR)
(74) Representative: Hengelhaupt, Jürgen D., Dipl.-Ing.

(57) **Abstract**

Disclosed is a football robot control system using infrared ray (IR) modules (30) capable of achieving the same transmission speed as a radio frequency (RF) modules with its circuit construction simplified. The football robot control system includes a repeater (20) for receiving a football robot control signal from a host computer (10) and outputting a specified control signal, IR modules for radio-transmitting the specified control signal outputted from the repeater, a football robot provided with a baseband type receiving section for receiving the specified control signal radio-transmitted from the IR modules, and a camera (50) for obtaining and transmitting to the host computer image information on a position and direction of the robot kit controlled based on the control system.

## Description

### BACKGROUND OF THE INVENTION

### Field of the Invention

The present invention relates to a football robot control system for paying a football game using football robots.

### Description of the Related Art

In a conventional football robot control system, a robot kit is generally radio-controlled using infrared (IR) modules or radio frequency (RF) modules.

However, since the conventional amplited shift keying (ASK) type IR module has a low communication speed (i.e., 9600 bps at maximum), it is difficult to control the robot kit to meet the game situations. Though the RF module has a superior performance, its cost is high and its circuit construction is complicated. Thus, it costs much to manufacture the football robot control system, and there is some difficulty in designing the robot control system. Also, its used frequency region is limited to two varieties, and thus only two football teams can play the game.

### SUMMARY OF THE INVENTION

Therefore, an object of the present invention is to provide a football robot control system using IR modules which achieves the same transmission speed as RF modules, and whose circuit construction is simplified but the manufacturing cost of robot control system is lowered.

In accordance with the present invention, the above object is accomplished by providing a football robot control system comprising a repeater for receiving a football robot control signal from a host computer and outputting a specified control signal, infrared (IR) modules for radio-transmitting the specified control signal outputted from the repeater, a football robot kit equipped with a baseband type receiving section for receiving the specified control signal radio-transmitted from the IR modules, and a camera for obtaining and transmitting to the host computer image information on a position and direction of the robot kit controlled based on the control signal.

The present invention adopts an infrared data association (IrDA) method which has a faster communication speed than the conventional amplited shift keying (ASK) method, and enables data communication using the IR module.

### BRIEF DESCRIPTION OF THE DRAWINGS

The above object, and other features and advantages of the present invention will become more apparent after a reading of the following detailed description when taken in conjunction with the drawings, in which:
FIG. 1 is a view illustrating the football robot control system according to the present invention;
FIG. 2 is a view illustrating the construction of the IR module and the repeater used in the football robot control system of FIG. 1;
FIG. 3 is a view illustrating a module supporter for supporting the IR module illustrated in FIG. 2;
FIG. 4 is a view illustrating a region where transmission of the IR control signal to the robot is possible in a playing ground;
FIG. 5 is a waveform diagram explaining the IR control signal of the present invention and the IR control signal of the conventional system; and

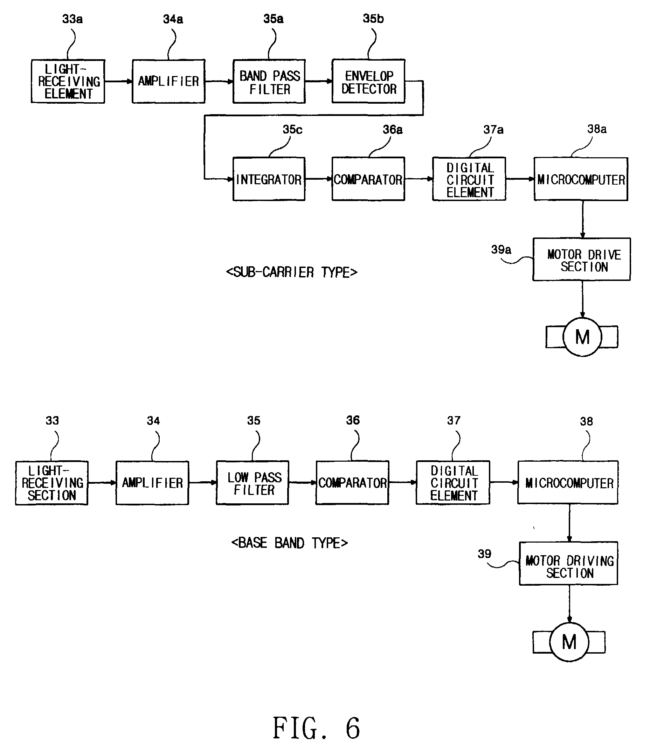

FIG. 6 is a block diagram illustrating the IR receiving section of the present invention and the IR receiving section of the conventional system.

### DETAILED DESCRIPTION OF THE PREFERRED EMBODIMENTS

The construction and operation of the football robot control system according to the preferred embodiment of the present invention will be explained with reference to the accompanying drawings.

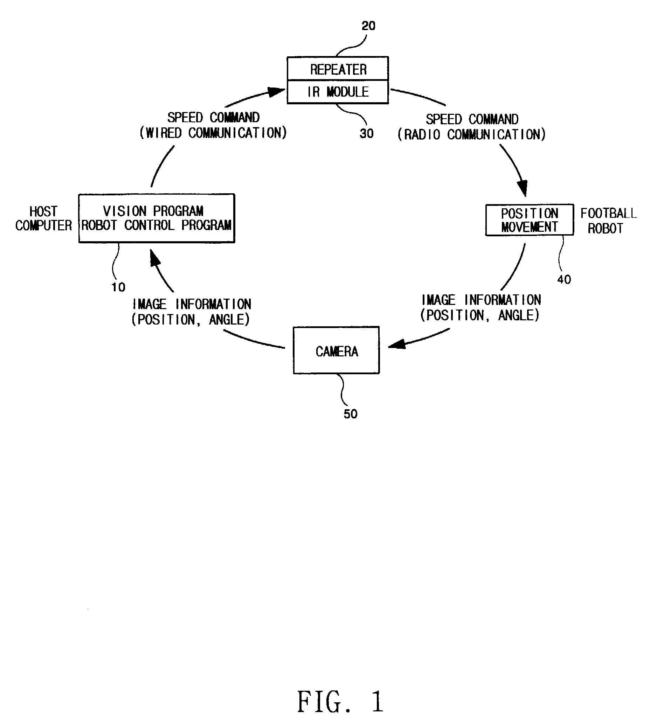

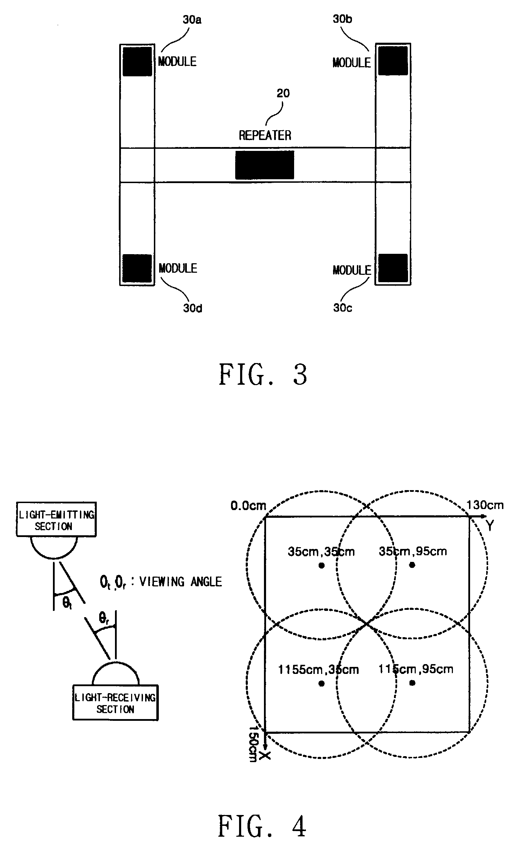

Referring to FIGs. 1, 2, and 3, the football robot control system according to the present invention comprises a repeater (20) for receiving a control command for controlling the football robot from a host computer (10), and IR modules (30) for transmitting infrared data association 1.0(IrDA1.0) type IR signals based on the control signal from the repeater (20). The IR module (30) is installed at each corner of the "H"-shaped supporter as like FIG. 4, and the repeater (20) is installed at the center of the supporter. Also, a camera (50) for photographing the controlled state of the football robot which has received the IR signal of the IrDA1.0 type, and transmitting image information on the position, direction, etc., of the photographed football robot to the host computer (10) is provided in another supporter installed on an upper part of a football playing ground.

A football robot receiving section which receives the control signal from the IR module (30) is constructed with a baseband type receiving circuit, and the construction includes a light-receiving element (33) for receiving the signal transmitted from the IR module, an amplifier (34) for amplifying the received signal, a low pass filter (33) for removing high-frequency components, which act as noise, from the amplified signal, a microcomputer (38) for receiving an output signal of the low pass filter (33), a motor driving section (39) for driving a motor based on an output signal of the microcomputer (38), and a power supply section for supplying the power to the football robot.

The operation of the football robot control system according to the present invention as constructed above will be explained.

The host computer (10) radio-transmits all the information on the position of a ball and the football robot (40) in the playing ground, the position, speed, and operational and tactical commands to the football robot (40) through the repeater (20) and the IR module (30). In this case, the control commands of the host computer (10) are transmitted to the football robot at a start, stop, and restart time of the game only.

Also, the host computer (10) transmits the control commands to the football robot (40) through the repeater (20) and the IR module (30). In transmitting the football robot control signals, the present invention uses the IrDA1.0 method having the communication speed of 19200 bps, while the conventional football robot control system uses the ASK method having the communication speed of 9600 bps at maximum.

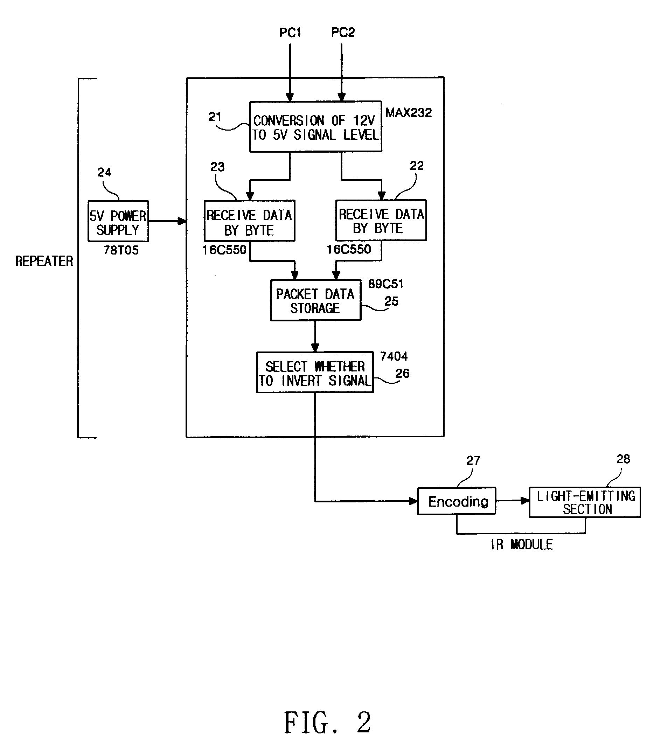

The repeater (20), as shown in FIG. 2, converts an input voltage of more than 9V from a host computer receiver (21), which receives the control signal of the host computer (10), into a logic level signal of 5V, and outputs the logic signal to the microcomputer (25) built in the repeater (20) through an asynchronous communication section (22) as an interrupt signal.

The microcomputer (25), based on the interrupt signal inputted from the asynchronous communication sections (22) and (23), reads out data stored in the asynchronous communication sections (22, 23) byte by byte, and then stores the read data to complete a data packet. When the data packet is completed, the microcomputer (25) outputs the signals from the data packet through an inverter (26).

The inverter (26) may invert or may not invert its output signal according to a jumper connected thereto. In case of using the IR module (30), a non-inverted signal is outputted to the IR module (30).

Accordingly, the football robot (40) receives the output signal of the IR module (30), which is composed of an encoding section (27) and a light-emitting section (28), through the football robot receiving section mounted on the football robot (40), and proceeds the game in accordance with the received control signal. Also, the position, angel, etc., of the football robot controlled by the received control signal are photographed by the camera to obtain the image information. Thus, proper tactics according to the situations are computed by the host computer (10), and transferred to the respective football robot.

The operation of the repeater (20) that is one of the constituent elements of the present invention will be explained.

Since the IR module (30) has only one transmission channel, it is impossible that two football teams commonly use the IR module in a playing ground. However, if the two teams have the same data packet, it is possible to commonly use the channel of the IR module (30) through the repeater (20).

The repeater (20) can be commonly used by two football teams which can have 5 output sections at maximum. For instance, if all the data packets of a specified form are received from a first computer PC1 and a second computer PC2, the received signal is outputted from the repeater (20) in the order of reception, and thus the two football teams can commonly use the IR module (30).

The asynchronous communication sections (22, 23) are the elements for effecting the asynchronous communication, and are called UART chips.

FIG. 3 is a view illustrating that by using the "H"-shaped module supporter, the IR module (30) is mounted at each corner of the supporter, and the repeater (20) is installed at the center thereof.

FIG. 4 is a view explaining the viewing angle in the IR communication.

In the IR communication method, if the data signal is transmitted from the light-emitting section to the light-receiving section, the data signal can be accurately received within the viewing angle. However, if the data signal is transmitted over the viewing angle, it cannot be accurately received.

The viewing angle range wherein the IR module can accurately send and receive the data is about 14°. This refers to the angle wherein the data can be accurately received at a 50-centimeter distance in a vertical direction from the camera mounted on the supporter having a height of 2 meters.

Since the viewing angle is limited as described above, at least four IR modules are required for the football robots (40) to receive the data from the host computer (10) in the whole playing ground.

As a result, in order to effectively transmit the data to the football robot (40) in the whole playing ground, the light material should be used to hang to the supporter of the camera after making the IR modules (30), which are mounted on the "H"-shaped module supporter as shown in FIG. 3.

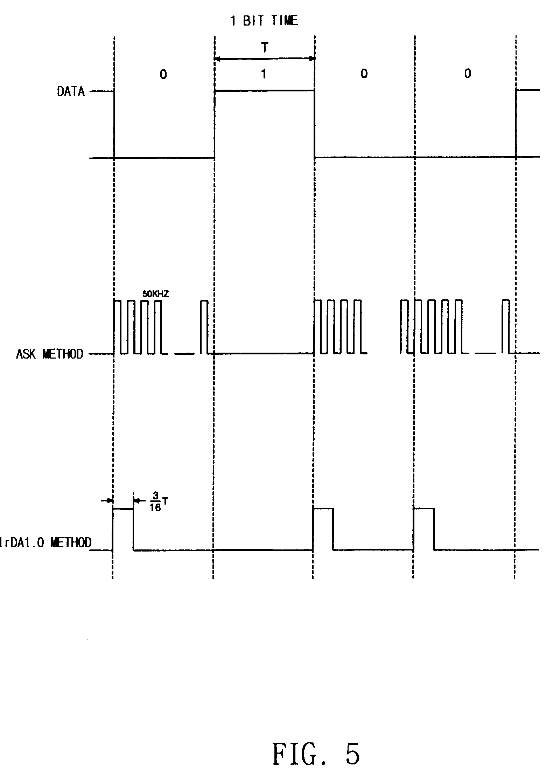

FIG. 5 is a views showing waveforms produced by the ASK method having the communication speed of 9600 bps at maximum, and the IrDA1.0 method having the communication speed of 19200 bps in transmitting the data through the IR module 30.

The ASK method transmits the information carried by a sub-carrier, and the IrDA1.0 method directly emits the infrared rays or not in accordance with the information signal. For example, as shown in FIG. 4, the ASK method produces a signal of 50KHz when the data is "0", and no signal when the data is "1".

On the contrary, the IrDA1.0 method produces a signal for a 3/16 of a one-bit time period when the data is "0", and no signal when the data is "1". Thus, the football robot (40) from the IR module by the IrDA1.0 method makes a goal to the opposite goal post based on the position, angle, and speed information transmitted.

At this time, the camera (50) obtains and transmits to the host computer (10) the image information on the position, angle, etc., of the football robot (40) being controlled according to the received signal. And this image information is used for producing the commands for the next operation of the football robot (40).

Especially, in order to heighten the communication quality in the baseband type circuit, the strength of light emission should be heightened, and the receiving sensitivity should be lowered to reduce an external noise.

In communicating through the IR modules (30), the viewing angle wherein the light-emitting element and the light-receiving element can mutually transmit and receive the data signals is limited. This is for not interfering with output signals of other IR modules (30).

The receiving section constructed in the football robot (40) that receives the control signal of the IR module (30) is of a baseband type. Thus, it is possible to communicate with a speed of 115.2Kbps at maximum, and the football robot (40) can communicate with the host computer (10) with a speed of 19200 bps.

As described above, according to the present invention, since the IR modules using the IrDA type IR communication method are used instead of the conventional ASK method, the high communication speed similar to that of the existing RF module can be achieved. Also, by replacing the expensive RF modules with the inexpensive IR modules, the cost for manufacturing the robot football control system is lowered. Also, since the receiving section adopts the baseband type communication, the construction of the receiving section is simplified.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A football robot control system comprising:
a repeater for receiving a football robot control signal from a host computer and outputting a specified control signal;
infrared (IR) modules for radio-transmitting the specified control signal outputted from the repeater;
a football robot provided with a baseband type receiving section for receiving the specified control signal radio-transmitted from the IR modules; and
a camera for obtaining and transmitting to the host computer image information on a position and direction of the football robot controlled based on the control signal.

2. The football robot control system of claim 1, wherein the baseband type receiving section of the football robot for receiving the control signal from the IR modules comprises:
a light-receiving element for receiving the IR module signal;
an amplifier for amplifying the received signal with a predetermined amplification factor;
a low pass filter for removing a high-frequency noise component from the amplified signal;
a comparing section for comparing the control signal passed the low pass filter with a predetermined reference value;
a digital circuit section for converting a signal of, the comparing section into a digital signal to output to a microcomputer; and,
a microcomputer for receiving an output signal of the digital circuit section, and controls a motor driving section based on an output signal of the digital circuit section.

3. The football robot control system of claim 1, wherein the IR module comprises:
an encoding section for encoding the control signal received from the host computer through the repeater; and
a light-emitting section and a light-receiving section, integrally formed, for transmitting and receiving an output signal of the encoding section to infrared rays.
